# EUROPÄISCHE PATENTSCHRIFT

(11) **EP 1 262 356 B1**
(45) Veröffentlichungstag und Bekanntmachung des Hinweises auf die Patenterteilung: **26.11.2003**
(21) Anmeldenummer: 02007804.4
(22) Anmeldetag: 06.04.2002
(51) Int. Cl.: B60K 15/05

(54) **Kraftfahrzeug-Kraftstofftank mit einem Einfüllstutzen zur Aufnahme einer Zapfpistole für Dieselkraftstoff**
Fuel tank for a vehicle comprising a filler neck for receiving a diesel fuel filler nozzle
Réservoir de carburant pour un véhicule avec un embout pour recevoir un pistolet de remplissage de gazole

(30) Priorität: 30.05.2001 DE 10126208
(43) Veröffentlichungstag der Anmeldung: 04.12.2002
(73) Patentinhaber: Bayerische Motoren Werke Aktiengesellschaft, 80809 München (DE)
(72) Erfinder: Nefischer, Peter, 4320 Perg (AT); Wimmer, Rudolf, 4431 Haidershofen (AT); Hoelle, Christoph, 4400 Steyr (AT); Steindl, Werner, 4810 Gmunden (AT)

(56) Entgegenhaltungen:
- DE-A- 10 037 824
- FR-A- 2 741 014

## Beschreibung

### Beschreibung für folgende Vertragsstaaten : BS, FR, GB, TT und SE

Die Erfindung betrifft einen Kraftfahrzeug-Kraftstofftank mit einem Einfüllstutzen, der hinsichtlich seiner Abmessung zur Aufnahme einer einen größeren Durchmesser aufweisenden Tank-Zapfpistole, insbesondere einer Zapfpistole für Dieselkraftstoff, vorgesehen ist, sowie mit einem Element, das auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser ein Befüllen des Kraftstofftanks verhindert wird. Zum technischen Umfeld wird beispielshalber auf die DE 196 39 825 A1 verwiesen, während ein Kraftstofftank nach dem Oberbegriff des Anspruchs 1 in der nicht vorveröffentlichten deutschen Patentanmeldung 100 51 847 beschrieben ist. Es wird weite auf die nach veröffentlichte DE 100 37 824 A verwiesen.

Mit der Markteinführung von Bleifrei-Kraftstoffen für Ottomotoren wurden die bis dahin für sämtliche Kraftstoffsorten einen einheitlichen Durchmesser aufweisenden Tank-Zapfpistolen (jedenfalls solche für Personenkraftwagen) für diesen neuen Kraftstoff im Durchmesser reduziert. Durch einen sog. Restriktor mit einer sog. Bleifrei-Klappe im Einfüllrohr von Kfz.-Kraftstofftanks war und ist es somit nicht möglich, bleihaltigen Otto-Kraftstoff oder DieselKraftstoff (die an den Tankstellen hierfür vorhandenen Zapfpistolen besitzen den gleichen, gegenüber den Zapfpistolen für Bleifrei-Kraftstoff größeren Durchmesser) in den Kraftstofftank eines Kfz.'s einzufüllen, das für Betrieb mit Bleifrei-Kraftstoffen vorgesehen ist. Auf diese Weise ist der an diesen Fahrzeugen vorhandene Abgaskatalysator sicher vor einer Zerstörung, hervorgerufen durch Falschbetankung mit bleihaltigem Kraftstoff, geschützt.

Weiterhin ist es jedoch möglich, dass versehentlich bleifreier Otto-Kraftstoff (Benzin) in den Tank eines Kfz.'s eingefüllt wird, welches mit Dieselkraftstoff zu betreiben ist. Wird dann einem Dieselmotor reiner Ottokraftstoff zugeführt, so kann dies zu erheblichen Schäden führen. Allenfalls ein geringer Anteil von Ottokraftstoff bzw. Benzin in einer relativ großen Menge von Dieselkraftstoff kann toleriert werden (und wurde bzw. wird teilweise im Winter beigemengt, um den Kaltstart zu erleichtern), einen höheren Benzinanteil in einem Diesel-Benzin-Kraftstoffgemisch gilt es jedoch unbedingt zu vermeiden.

Mit der vorliegenden Erfindung soll nun aufgezeigt werden, wie eine Falschbetankung insbesondere eines mit Dieselkraftstoff zu betreibenden Fahrzeuges mit Bleifrei-Benzin vermieden werden kann, bzw. wie vermieden werden kann, dass ein Kraftstofftank mit einem Einfüllstutzen mit größerem Durchmesser mit Kraftstoff aus einer Zapfpistole mit kleinerem Durchmesser befüllt wird. (=Aufgabe der Erfindung).

Zur Lösung dieser Aufgabe ist vorgesehen, dass ein (in der bereits genannten, nicht vorveröffentlichten deutschen Patentanmeldung 100 51 847 beschriebenes) Element, welches auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser in den Einfüllstutzen ein Befüllen des Kraftstofftanks verhindert wird, in Form eines hilfskraftbetätigten Sperrventils ausgebildet ist, das in seiner Schließposition die Verbindung zwischen dem Einfüllstutzen und dem Innenraum des Kraftstofftanks unterbricht, wobei die Hilfskraftbetätigung zum Öffnen des Sperrventils von einer Steuereinheit in Gang gesetzt wird, wenn diese mit Hilfe eines geeigneten Sensors eine in den Einfüllstutzen eingeführte Zapfpistole als eine solche mit besagtem größeren Durchmesser identifiziert. Vorteilhafte Aus- und Weiterbildungen sind im Anspruch 2 aufgeführt.

Ein erfindungsgemäß vorgeschlagenes Sperrventil, das mit geeigneter Hilfskraft betätigt, insbesondere geöffnet werden kann, stellt eine zugleich einfache und zuverlässige Lösung dar, mit Hilfe derer ein Befüllen des Kraftstofftanks mit der falschen Kraftstoffsorte (und somit mit der falschen Tank-Zapfpistole) verhindert werden kann. Bevorzugt kann nur das Öffnen sowie ggf. das Offenhalten des Sperrventils mit Hilfskraftunterstützung erfolgen, wohingegen die Schließbewegung durch ein entsprechend (durch die vorangegangene Öffnungsbewegung) gespanntes Federelement initiiert werden kann. Auf diese Weise ist gewährleistet, dass das Sperrventil in seiner üblichen Ruheposition aus Sicherheitsgründen geschlossen ist.

In Frage kommen unterschiedliche Hilfsantriebe zum Betätigen (insbesondere Öffnen) des Sperrventils, so bspw. auf elektromechanischer, pneumatischer oder hydraulischer Basis. Besonders einfach und zuverlässig ist jedoch ein elektromagnetisch betätigtes Sperrventil, welches dann bevorzugt von einer elektronischen Steuereinheit geeignet angesteuert wird. Diese elektronische Steuereinheit wertet die Signale eines geeigneten Sensors aus und kann demzufolge erkennen, ob eine "richtige" Tank-Zapfpistole (mit dem größeren Durchmesser) oder eine "falsche" Tank-Zapfpistole mit einem kleineren Durchmesser in den Einfüllstutzen eingeführt wurde. In Abhängigkeit hiervon wird dann das Sperrventil entweder geöffnet oder geschlossen gehalten.

Auch dieser genannte Sensor kann grundsätzlich mit verschiedenen physikalischen Effekten arbeiten. So kann bspw. ein optischer Sensor zum Einsatz kommen, jedoch ist ein elektromagnetischer Sensor oder bevorzugt ein Hallsensor wesentlich zuverlässiger und dabei relativ einfach anzuordnen. Stets erhält man mit den erfindungswesentlichen Merkmalen eine sichere und einfache Vorrichtung, mit Hilfe derer insbesondere eine Falschbetankung von dieselmotorisch angetriebenen Kraftfahrzeugen mit Bleifrei-Ottokraftstoff vermieden werden kann.

### Beschreibung für folgende Vertragsstaaten : DE

Die Erfindung betrifft einen Kraftfahrzeug-Kraftstofftank mit einem Einfüllstutzen, der hinsichtlich seiner Abmessung zur Aufnahme einer einen größeren Durchmesser aufweisenden Tank-Zapfpistole, insbesondere einer Zapfpistole für Dieselkraftstoff, vorgesehen ist, sowie mit einem Element, das auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser ein Befüllen des Kraftstofftanks verhindert wird. Zum technischen Umfeld wird beispielshalber auf die DE 196 39 825 A1 verwiesen, während ein Kraftstofftank nach dem Oberbegriff des Anspruchs 1 in der nicht vorveröffentlichten deutschen Patentanmeldung 100 51 847 beschrieben ist. Es wird weite auf die nach veröffentlichte DE 100 37 824 A verwiesen.

Mit der Markteinführung von Bteifrei-Kraftstoffen für Ottomotoren wurden die bis dahin für sämtliche Kraftstoffsorten einen einheitlichen Durchmesser aufweisenden Tank-Zapfpistolen (jedenfalls solche für Personenkraftwagen) für diesen neuen Kraftstoff im Durchmesser reduziert. Durch einen sog. Restriktor mit einer sog. Bleifrei-Klappe im Einfüllrohr von Kfz.-Kraftstofftanks war und ist es somit nicht möglich, bleihaltigen Otto-Kraftstoff oder DieselKraftstoff (die an den Tankstellen hierfür vorhandenen Zapfpistolen besitzen den gleichen, gegenüber den Zapfpistolen für Bleifrei-Kraftstoff größeren Durchmesser) in den Kraftstofftank eines Kfz.'s einzufüllen, das für Betrieb mit Bleifrei-Kraftstoffen vorgesehen ist. Auf diese Weise ist der an diesen Fahrzeugen vorhandene Abgaskatalysator sicher vor einer Zerstörung, hervorgerufen durch Falschbetankung mit bleihaltigem Kraftstoff, geschützt.

Weiterhin ist es jedoch möglich, dass versehentlich bleifreier Otto-Kraftstoff (Benzin) in den Tank eines Kfz.'s eingefüllt wird, welches mit Dieselkraftstoff zu betreiben ist. Wird dann einem Dieselmotor reiner Ottokraftstoff zugeführt, so kann dies zu erheblichen Schäden führen. Allenfalls ein geringer Anteil von Ottokraftstoff bzw. Benzin in einer relativ großen Menge von Dieselkraftstoff kann toleriert werden (und wurde bzw. wird teilweise im Winter beigemengt, um den Kaltstart zu erleichtern), einen höheren Benzinanteil in einem Diesel-Benzin-Kraftstoffgemisch gilt es jedoch unbedingt zu vermeiden.

Mit der vorliegenden Erfindung soll nun aufgezeigt werden, wie eine Falschbetankung insbesondere eines mit Dieselkraftstoff zu betreibenden Fahrzeuges mit Bleifrei-Benzin vermieden werden kann, bzw. wie vermieden werden kann, dass ein Kraftstofftank mit einem Einfüllstutzen mit größerem Durchmesser mit Kraftstoff aus einer Zapfpistole mit kleinerem Durchmesser befüllt wird. (=Aufgabe der Erfindung).
Zur Lösung dieser Aufgabe ist vorgesehen, dass ein (in der bereits genannten, nicht vorveröffentlichten deutschen Patentanmeldung 100 51 847 beschriebenes) Element, welches auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser in den Einfüllstutzen ein Befüllen des Kraftstofftanks verhindert wird, in Form eines mit elektromagnetischer, elektomechanischer, pneumatischer oder hydraulischer Hilfskraft betätigten Sperrventils ausgebildet ist, das in seiner Schließposition die Verbindung zwischen dem Einfüllstutzen und dem Innenraum des Kraftstofftanks unterbricht, wobei die Hilfskraftbetätigung zum Öffnen des Sperrventils von einer Steuereinheit in Gang gesetzt wird, wenn diese mit Hilfe eines geeigneten Sensors eine in den Einfüllstutzen eingeführte Zapfpistole als eine solche mit besagtem größeren Durchmesser identifiziert. Vorteilhafte Aus- und Weiterbildungen sind im Anspruch 2 aufgeführt.

Ein erfindungsgemäß vorgeschlagenes Sperrventil, das mit geeigneter Hilfskraft betätigt, insbesondere geöffnet Werden kann, stellt eine zugleich einfache und zuverlässige Lösung dar, mit Hilfe derer ein Befüllen des Kraftstofftanks mit der falschen Kraftstoffsorte (und somit mit der falschen Tank-Zapfpistole) verhindert werden kann. Bevorzugt kann nur das Öffnen sowie ggf. das Offenhalten des Sperrventils mit Hilfskraftunterstützung erfolgen, wohingegen die Schließbewegung durch ein entsprechend (durch die vorangegangene Öffnungsbewegung) gespanntes Federelement initiiert werden kann. Auf diese Weise ist gewährleistet, dass das Sperrventil in seiner üblichen Ruheposition aus Sicherheitsgründen geschlossen ist.

In Frage kommen unterschiedliche Hilfsantriebe zum Betätigen (insbesondere Öffnen) des Sperrventils, so bspw. auf elektromechanischer, pneumatischer oder hydraulischer Basis. Besonders einfach und zuverlässig ist jedoch ein elektromagnetisch betätigtes Sperrventil, welches dann bevorzugt von einer elektronischen Steuereinheit geeignet angesteuert wird. Diese elektronische Steuereinheit wertet die Signale eines geeigneten Sensors aus und kann demzufolge erkennen, ob eine "richtige" Tank-Zapfpistole (mit dem größeren Durchmesser) oder eine "falsche" Tank-Zapfpistole mit einem kleineren Durchmesser in den Einfüllstutzen eingeführt wurde. In Abhängigkeit hiervon wird dann das Sperrventil entweder geöffnet oder geschlossen gehalten.

Auch dieser genannte Sensor kann grundsätzlich mit verschiedenen physikalischen Effekten arbeiten. So kann bspw. ein optischer Sensor zum Einsatz kommen, jedoch ist ein elektromagnetischer Sensor oder bevorzugt ein Hallsensor wesentlich zuverlässiger und dabei relativ einfach anzuordnen. Stets erhält man mit den erfindungswesentlichen Merkmalen eine sichere und einfache Vorrichtung, mit Hilfe derer insbesondere eine Falschbetankung von dieselmotorisch angetriebenen Kraftfahrzeugen mit Bleifrei-Ottokraftstoff vermieden werden kann.

## Patentansprüche (Patentansprüche für folgende(n) Vertragsstaat(en): BS, FR, GB, IT und SE)

1. Kraftfahrzeug-Kraftstofftank mit einem Einfüllstutzen, der hinsichtlich seiner Abmessung zur Aufnahme einer einen größeren Durchmesser aufweisenden Tank-Zapfpistole, insbesondere einer Zapfpistole für Dieselkraftstoff, vorgesehen ist, sowie mit einem Element, welches auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser in den Einfüllstutzen ein Befüllen des Kraftstofftanks verhindert wird, **dadurch gekennzeichnet, dass** das Element in Form eines hilfskraftbetätigten Sperrventils ausgebildet ist, das in seiner Schließposition die Verbindung zwischen dem Einfüllstutzen und dem Innenraum des Kraftstofftanks unterbricht, wobei die Hilfskraftbetätigung zum Öffnen des Sperrventils von einer Steuereinheit in Gang gesetzt wird, wenn diese mit Hilfe eines geeigneten Sensors eine in den Einfüllstutzen eingeführte Zapfpistole als eine solche mit besagtem größeren Durchmesser identifiziert.

2. Kraftstofftank nach Anspruch 1, **gekennzeichnet durch** zumindest eines der folgenden Merkmale:
• das Sperrventil wird elektromagnetisch betätigt
• der Sensor ist als elektromagnetischer Sensor oder als Hallgeber ausgebildet

## Patentansprüche (Patentansprüche für folgende(n) Vertragsstaat(en): DE)

1. Kraftfahrzeug-Kraftstofftank mit einem Einfüllstutzen, der hinsichtlich seiner Abmessung zur Aufnahme einer einen größeren Durchmesser aufweisenden Tank-Zapfpistole, insbesondere einer Zapfpistole für Dieselkraftstoff, vorgesehen ist, sowie mit einem Element, welches auf das Einführen einer Tank-Zapfpistole mit dem besagten größeren Durchmesser anspricht und daraufhin ein Befüllen des Kraftstofftanks zulässt, während bei Einführen einer Tank-Zapfpistole mit einem kleineren Durchmesser in den Einfüllstutzen ein Befüllen des Kraftstofftanks verhindert wird,
**dadurch gekennzeichnet, dass** das Element in Form eines mit elektromagnetischer oder elektromechanischer oder pneumatischer oder hydraulischer Hilfskraft betätigten Sperrventils ausgebildet ist, das in seiner Schließposition die Verbindung zwischen dem Einfüllstutzen und dem Innenraum des Kraftstofftanks unterbricht, wobei die Hilfskraftbetätigung zum Öffnen des Sperrventils von einer Steuereinheit in Gang gesetzt wird, wenn diese mit Hilfe eines geeigneten Sensors eine in den Einfüllstutzen eingeführte Zapfpistole als eine solche mit besagtem größeren Durchmesser identifiziert.

2. Kraftstofftank nach Anspruch 1, **dadurch gekennzeichnet, dass** der Sensor als elektromagnetischer Sensor oder als Hallgeber ausgebildet ist.

## Claims (Claims for the following Contracting State(s): ES, FR, GB, IT and SE)

1. A motor vehicle fuel tank comprising a filling connection piece which, with respect to its size, is provided for receiving a tank filler gun having a larger diameter, especially a filler gun for diesel fuel, and comprising an element which responds to the introduction of a tank filler gun with said larger diameter and then allows filling of the fuel tank, while in the event of introduction of a tank fuel gun with a smaller diameter into the filling connection piece, filling of the fuel tank is inhibited, **characterised in that** the element is designed in the form of a shut-off valve actuated by auxiliary force which, in its closure position, interrupts the connection between the filling connection piece and the interior of the fuel tank, the auxiliary force being started up by a control unit to open the shut-off valve when, with the aid of a suitable sensor, the control unit identifies a filler gun introduced into the filling connection piece as a filler gun with said larger diameter.

2. A fuel tank according to claim 1, **characterised by** at least one of the following features:
• the shut-off valve is electromagnetically operated
• the sensor is designed as an electromagnetic sensor or as a Hall sensor.

## Claims (Claims for the following Contracting State(s): DE)

1. A motor vehicle fuel tank comprising a filling connection piece which, with respect to its size, is provided for receiving a tank filler gun having a larger diameter, especially a filler gun for diesel fuel, and comprising an element which responds to the introduction of a tank filler gun with said larger diameter and then allows filling of the fuel tank, while in the event of introduction of a tank fuel gun with a smaller diameter into the filling connection piece, filling of the fuel tank is inhibited, **characterised in that** the element is designed in the form of a shut-off valve actuated by electromagnetic or electromechanical or pneumatic or hydraulic auxiliary force which, in its closure position, interrupts the connection between the filling connection piece and the interior of the fuel tank, the auxiliary force being started up by a control unit to open the shut-off valve when, with the aid of a suitable sensor, the control unit identifies a filler gun introduced into the filing connection piece as a filler gun with said larger diameter.

2. A fuel tank according to claim 1, **characterised in that** the sensor is designed as an electromagnetic sensor or as a Hall sensor.

## Revendications (Revendications pour l'(les) Etat(s) contractant(s) suivant(s): ES, FR, GB, IT et SE)

1. Réservoir de carburant pour un véhicule avec un embout dont les dimensions sont prévues pour recevoir un pistolet de remplissage de réservoir d'un diamètre plus grand, notamment un pistolet de remplissage de gazole, ainsi qu'avec un élément qui se déclenche à l'introduction d'un pistolet de remplissage de réservoir d'un diamètre plus grand mentionné et qui autorise alors le remplissage du réservoir de carburant alors qu'il empêche celui du réservoir de carburant si un pistolet de remplissage de réservoir d'un diamètre plus petit est introduit,
**caractérisé en ce que**
l'élément agencé sous forme d'un clapet anti-retour et actionné par le dispositif d'assistance interrompt en position fermée la liaison entre l'embout et l'intérieur du réservoir de carburant, et l'actionnement du dispositif d'assistance pour l'ouverture du clapet anti-retour est mis en route par un module de commande lorsqu'il identifie à l'aide d'un capteur approprié que le pistolet de remplissage introduit dans l'embout présente un diamètre plus grand indiqué.

2. Réservoir de carburant suivant la revendication 1 **caractérisé par** au moins l'une des caractéristiques suivantes :
• le clapet anti-retour est à actionnement électromagnétique,
• le capteur est agencé sous forme de capteur électromagnétique ou de capteur à effet de hall.

## Revendications (Revendications pour l'(les) Etat(s) contractant(s) suivant(s): DE)

1. Réservoir de carburant pour un véhicule avec un embout dont les dimensions sont prévues pour recevoir un pistolet de remplissage de réservoir d'un diamètre plus grand, notamment un pistolet de remplissage de gazole, ainsi qu'avec un élément qui se déclenche à l'introduction d'un pistolet de remplissage de réservoir d'un diamètre plus grand mentionné et qui autorise alors le remplissage du réservoir de carburant alors qu'il empeche celui du réservoir de carburant si un pistolet de remplissage de réservoir d'un diamètre plus petit est introduit,
**caractérisé en ce que**
l'élément agencé sous forme d'un clapet anti-retour et actionné par le dispositif d'assistance électromagnétique ou électromécanique ou pneumatique ou hydraulique interrompt en position fermée la liaison entre l'embout et l'intérieur du réservoir de carburant, et l'actionnement du dispositif d'assistance pour l'ouverture du clapet anti-retour est mis en route par un module de commande lorsqu'il identifie à l'aide d'un capteur approprié que le pistolet de remplissage introduit dans l'embout présente un diamètre plus grand indiqué.

2. Réservoir de carburant suivant la revendication 1
**caractérisé en ce que**
le capteur est agencé sous forme de capteur électromagnétique ou de capteur à effet de hall.
